# NOUVEAU FASCICULE DE BREVET EUROPEEN

(11) **EP 0 288 357 B2**
(45) Date de publication et mention de la décision concernant l'opposition: **17.09.1997**
(45) Mention de la délivrance du brevet: 03.07.1991
(21) Numéro de dépôt: 88400885.5
(22) Date de dépôt: 13.04.1988
(51) Int. Cl.: A41D 27/06, C09J 5/00, C09J 11/04

(54) **Procédé de fabrication de renfort textile et tissu obtenu**
Verfahren zur Herstellung von Textilverstärkung und damit erhaltenes Gewebe
Method of making a textile stiffener, and fabric treated therewith

(30) Priorité: 17.04.1987 FR 8705496
(43) Date de publication de la demande: 26.10.1988
(73) Titulaire: LAINIERE DE PICARDIE: Société anonyme, 80200 Peronne (FR)
(72) Inventeur: Demoulin, Bernard, F-80200 Peronne (FR)
(74) Mandataire: Derambure, Christian

(56) Documents cités:
- EP-A- 0 009 951
- EP-A- 0 219 378
- DE-A- 1 560 789
- DE-A- 2 210 478
- DE-U- 8 607 229
- FR-A- 1 432 767
- FR-A- 2 090 504
- FR-A- 2 339 661
- FR-A- 2 586 717
- Sroka Peter;"Handbuch der textilen Fixiereinlagen", Seiten 5,8,9,11,13,14,87-96,128-132,136,138-140;1983
- Römpps Chemie-Lexikon;"Füllstoffe";1976
- Technisches Merkblatt der Firma Plate Bonn GmbH; 06.83
- Mitteilung der Firma Hoechst AG an der Firma Carl Freudenberg

## Description

L'invention concerne un procédé de fabrication de renfort textile selon le preambule de la Revendication 1 qui est connu du document FR-A 2586717

Des toiles de renfort sont traditionnellement utilisées pour conférer à des tissus une souplesse ou une nervosité qu'ils n'ont pas par eux-mêmes. La fixation de ces toiles de renfort sur les tissus est maintenant fréquemment réalisé par collage à l'aide d'un adhésif à base de polymères (FR-A-1 432 767).

Lors de l'application de cet adhésif sur le renfort ou sur le tissu il faut éviter une pénétration trop importante de polymères dans le textile. En effet, une pénétration excessive produit des traversées qui peuvent engendrer une adhésion du polymère sur la deuxième face du textile particulièrement gênante lorsque le tissu est soumis à des contraintes de pression ou de chaleur ou de vaporisage.

Un objectif de la présente invention est de proposer une technique évitant ces traversées et fournissant un produit renforcé de qualité.

Un autre objectif de l'invention est de proposer une technique permettant le renfort à l'aide des produits adhésifs de tissus qui ne peuvent pas être traités par les méthodes classiques car leur surface est trop irrégulière.

A cet effet, il est propose un procédé de fabrication de renfort textile selon la partie caracterisante de la revendication 1.

L'invention sera développée dans la description qui va suivre en référence aux dessins dans lesquels:

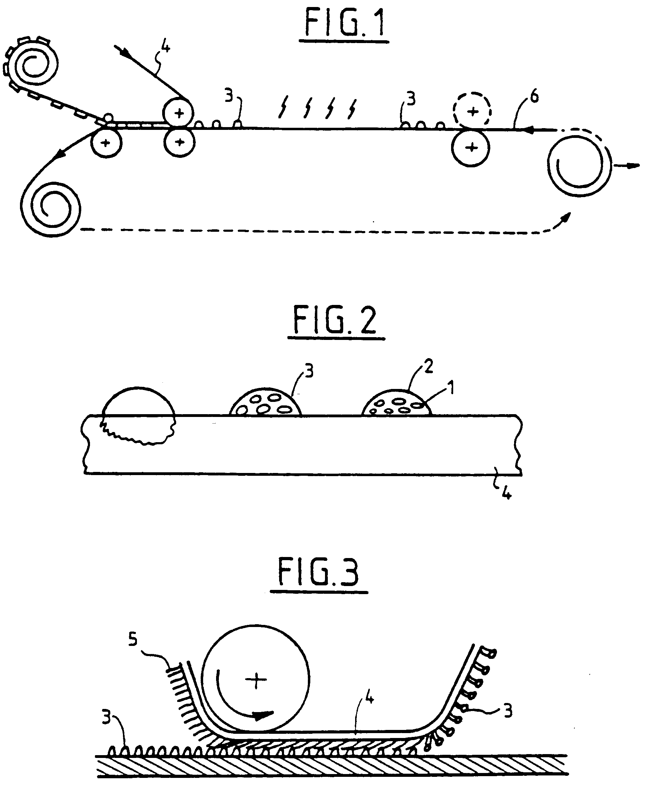

- La figure 1 est un mode de réalisation du procédé.
- La figure 2 est une vue en coupe du tissu.
- La figure 3 est une vue en coupe d'un deuxième mode de réalisation du tissu.

L'adhésif à base de polymères thermofusibles et thermocollants pour textile selon l'invention comporte une charge constituée de particules inertes 1 approximativement sphériques réparties d'une manière homogène au sein de l'adhésif.

Les polymères 2 utilisés peuvent être tous ceux utilisés dans le domaine textile. Il peut s'agir par exemple de copolyamides, copolyester, de certains de leurs dérivés ou d'un mélange de ces produits. Ils sont utilisés en dispersion dans de l'eau, de l'alcool ou dans un autre solvant polaire et se présentent à température ambiante sous forme de pâte. La dimension des grains de polymères est généralement comprise entre 0 et 100 microns. Les propriétés de la pâte sont souvent améliorées par l'adjonction de produits épaississants (acrylate ou polyacrylate), d'agents dispersants, d'agents thixotropes, d'agents antimoussants et d'agent de pigmentation.

D'une manière surprenante, il a été montré que l'adjonction à un adhésif d'une charge constituée de particules inertes permet d'améliorer ses qualités et de imiter sa pénétration dans le tissu lors de son application. Par un effet mécanique, la pénétration de cette charge dans le textile est très limitée sinon impossible et les particules qui la composent retiennent les polymères qui les enrobent empêchant ainsi leurs pénétrations dans le tissu.

Cet effet persiste lorsque l'on applique une pression modérée assurant un bon contact entre l'adhésif et le textile.

Les propriétés de l'adhésif selon l'invention résultant de cet effet mécanique, la principale qualité recherchée pour la charge sera le caractère inerte des produits qui la composent vis-à-vis des autres composants de l'adhésif et vis-à-vis des textiles sur lesquels ils devront être appliqués. Il sera préférable d'utiliser un produit dans lequel il est possible de réaliser des particules de dimensions relativement constantes.

Ainsi on pourra utiliser une charge minérale par exemple à base de silice ou de silicate métallique, de sels de calcium (carbonate, sulfate), de craie, de microbilles de verte, de talc, de sels métalliques (chrome, vanadium, zinc,...) et préférentiellement de dioxyde de titane connu pour a totale inertie chimique face aux agents épaississants utilisés dans l'adhésif.

On pourra également utiliser une charge organique thermoplastique par exemple à base de polyéthylène, de polypropylène, de polystyrène ou de tout polymère dont la température de fusion est supérieure à la température à laquelle devra être porté l'adhèsif lors de son utilisation. On pourra encore utiliser des charges organiques thermodurcissables telles que les phénoplastes préréticulés, les aminoplastes préréticulés ou toute autre résine thermodurcie micronisable.

Selon un mode de réalisation préféré, le diamètre des particules constituant la charge de l'adhésif est compris entre 0,1 et 10 microns ou encore selon une autre méthode de mesure ces particules devront avoir une surface spécifique BET comprise entre 25 et 400 m²/g. En effet, compte tenu de la dimension des grains de polymère généralement utilisés, les particules de cette dimension sont très bien enrobées par les polymères et l'homogénéité du mélange peut être bien assurée.

Selon l'invention la masse de la charge que comporte adhesif représente entre 1 et 10% de a masse totale. En effet, cette densité de particules, en combinaison avec les autres caractéristiques de l'adhésif permet d'obtenir les meilleurs résultats à la fois en ce qu'ils concernent la capacité d'adhésion du produit et en ce qui concerne son absence de pénétration du tissu sur lequel il est appliqué.

Le procédé de fabrication de renforts textiles selon l'invention utilise l'adhésif décrit plus haut.

En effet, compte tenu des propriétés de cet adhésif il est possible de l'appliquer sur le textile dans des conditions permettant une bonne qualité de l'adhésion en limitant la pénétration des polymères dans le tissu et sans traversée.

Selon un mode de réalisation préféré, l'association de l'adhésif et du substrat textile est réalisée sans chauffage du substrat.

L'adhésif est, dans ce cas, d'abord déposé sur un support de transfert 6 et ensuite transféré depuis le support de transfert 6 sur le substrat 4.

Selon un mode de réalisation préféré, la pression exercée lors de l'association de l'adhésif 3 et du substrat 4 est comprise entre 1 kg/m² et 10 kg/m² pendant une durée comprise de 0,01 s à 0,1 s. La charge limite les déformations de l'adhésif lors de l'exercice de cette pression. Ainsi, les motifs qu'il constitue et le volume des points sont conservés. La qualité du produit obtenu et particulièrement son pouvoir collant pour son utilisation ultérieur sont améliorés.

L'adhésif 3 peut avantageusement être constitué d'un ensemble de points d'un diamètre compris entre 350 et 750 microns répartis sur le substrat ce qui conserve une grande souplesse au produit de renfort.

On dépose d'abord sur le support de transfert 6 au moins partiellement anti-adhérent des gouttes 3 d'une dispersion de matière thermocollante. Puis, on chauffe les gouttes ainsi initialement déposées sur le support de transfert 6 en vue d'assurer le séchage de la dispersion déposée et la mise en fusion de la matière thermocollante qui la constitue. On met en contact, ensuite, les gouttes ainsi traitées se trouvant sur le support de transfert 6 et le substrat textile 4, sans chauffage dudit substrat textile 4, la matière thermocollante étant transférée du support de transfert 6 au substrat textile 4, sous forme de points, sans toutefois pénétrer a l'intérieur du substrat 4.

Selon l'invention, la pénétration du substrat textile étant faible il est possible de déposer l'adhésif directement sur une draperie, ce qui simplifie considérablement la technique de renforcement prise dans son ensemble. Les effets ainsi obtenus, concernant la souplesse ou la nervosité du tissu, sont comparables à ceux produits par l'adjonction d'un tissu de renfort.

L'absence de chauffage du substrat lors du transfert permet l'utilisation de cette technique même sur des draperies fragiles. La forme des motifs constitués par l'adhésif est déterminée en fonction des qualités recherchées (nervosité et volume). Des figures confèreront une nervosité au tissu dans la direction perpendiculaire. Une grille pourra donc produire des effets variés. Ces lignes ou ces motifs peuvent être continus, constitués d'une succession de points ou de tirets. De plus, il est possible, avec l'adhésif selon l'invention, d'appliquer le procédé à un substrat 4 dont l'état de surface n'est pas régulier. En particulier, il peut comporter une forte densité de fibrilles 5 à sa surface, sensiblement perpendiculaires à celle-ci.

La surface du textile étant définie par la trame, l'orientation des fibrilles 5 lorsqu'elles ne sont soumises à aucune contrainte, lui est sensiblement perpendiculaire.

Lors de l'association du substrat 4, et de l'adhésif 3, les fibrilles 5 sont couchées et empêchent le contact entre les éléments du substrat textile et l'adhésif. L'adhésif 3 est ainsi déposé sur les fibrilles 5 auxquelles il adhère qui reprennent ensuite leur orientation d'origine perpendiculaire à la trame du textile. La souplesse et le volume du tissu ainsi obtenu est remarquable et donne satisfaction dans beaucoup d'applications.

Par la technique proposée, le dépôt d'adhésif sur des fibrilles est donc rendu possible. La présence de fibrilles permet même de faciliter l'enduction du substrat par l'adhésif car les éventuelles irrégularités de surface de la trame sont compensées par les fibrilles lorsqu'elles se couchent. La surface présentée à l'adhésif lors du transfert est ainsi nés régulière. Lors du dépôt d'adhésif réalisé par le cylindre d'enduction, le débouchage des trous du cylindre est toujours bien réalisé : il est donc possible de réaliser des motifs variés selon l'effet (volume et nervosité) que l'on souhaite obtenir. Ces motifs peuvent être constitués de lignes continues, de points ou de tirets.

## Revendications

1. Procédé de fabrication de renforts textiles du type dans lequel un adhésif thermofusible thermocollant (3) est associé à un substrat textile (4), par transfert caractérisé en ce que l'adhésif comporte une charge constituée de particules inertes (1) approximativement sphériques réparties d'une manière homogène au sein de l'adhésif (2), les particules (1) représentant entre 1% et 10% de la masse de l'adhésif, de manière que lors de l'association de l'adhésif (3) et du substrat (4), les motifs que constitue l'adhésif (2) et le volume des points d'adhésif soient conservés.

2. Procédé selon la revendication 1, caractérisé en ce que le diamètre moyen des particules (1) contenues par l'adhésif (3) est compris entre 0,1 et 10 microns.

3. Procédé de fabrication selon la revendication 1 ou 2, caractérisé en ce que l'association de l'adhésif (3) et du substrat fertile (4) est réalisée sans chauffage du substrat.

4. Procédé selon la revendication 3, caractérisé en ce que la pression exercée lors de l'association de l'adhésif (3) et du substrat (4) est comprise entre 1 kg/m² et 10 kg/m² pendant une durée comprise de 0,01 s à 0,1 s.

5. Procédé selon l'une quelconque des revendications 1 à 4, caractérisé en ce que l'adhésif (3) est constitue d'un ensemble de points répartis sur le substrat (4).

6. Procédé selon la revendication 5, caractérisé en ce que le diamètre des points de l'adhésif (3) est compris entre 350 et 750 microns.

7. Procédé selon l'une quelconque des revendications 1 à 6, caractérisé en ce que le substrat textile (4) est une draperie.

8. Procédé selon l'une quelconque des revendications 1 à 6, caractérisé en ce que l'état de surface du substrat texte (4) n'est pas régulier.

9. Procédé selon l'une quelconque des revendications 1 à 6, caractérisé en ce que le substrat textile (4) comporte une forte densité de fibrilles (5) à sa surface sensiblement perpendiculaires à celle-ci.

10. Procédé selon la revendication 9, caractérisé en ce que lors de l'association de l'adhésif au substrat textile (4) les fibrilles (5) sont couchées et l'adhésif (3) est déposé sur des fibrilles (5).

## Claims

1. Process for the manufacture of textile reinforcements of the type in which a thermoadhesive hot-melt adhesive (3) is associated with a textile substrate (4) by transfer, characterised in that the adhesive comprises a filler consisting of approximately spherical inert particles (1) distributed uniformly within the adhesive (3), the particles (1) representing between 1% and 10% of the adhesive mass, such that the patterns made up by the adhesive (3) and the volume of the adhesive points are maintained during the association of the adhesive (3) and of the substrate (4).

2. Process according to Claim 1, characterised in that the mean diameter of the particles (1) contained in the adhesive (3) is between 0.1 and 10 microns.

3. Process of manufacture according to Claim 1 or 2, characterised in that the association of the adhesive (3) and of the textile substrate (4) is carried out without heating the substrate.

4. Process according to Claim 3, characterised in that the pressure exerted during the association of the adhesive (3) and of the substrate (4) is between 1 kg/m² and 10 kg/m² for a period of from 0.01 s to 0.1 s.

5. Process according to any one of Claims 1 to 4, characterised in that the adhesive (3) consists of a set of points distributed on the substrate (4).

6. Process according to Claim 5, characterised in that the diameter of the points of the adhesive (3) is between 350 and 750 microns.

7. Process according to any one of Claims 1 to 6, characterised in that the textile substrate (4) is a drapery.

8. Process according to any one of Claims 1 to 6, characterised in that the surface state of the textile substrate (4) is not uniform.

9. Process according to any one of Claims 1 to 6, characterised in that the textile substrate (4) comprises a high density of fibrils (5) on its surface, these being substantially perpendicular to the latter.

10. Process according to Claim 9, characterised in that during the association of the adhesive with the textile substrate (4) the fibrils (5) are laid down and the adhesive (3) is deposited onto fibrils (5).

## Patentansprüche

1. Verfahren zum Herstellen von Textilverstärkungen, bei welchen ein thermoschmelzendes und thermohaftendes Adhesiv (3) durch Übertragung mit einem Textilsubstrat (4) verbunden ist, dadurch gekennzeichnet, daß das Adhesiv eine Beladung, bestehend aus inerten etwa kugelförmigen Teilchen (1) enthält, welche homogen in das Innere des Adhesivs (3) eingebettet sind, wobei die Teilchen (1) 1 bis 10 Gew-% des Adhesivs betragen, sodaß bei der Verbindung des Adhesivs (3) und des Substrates (4) die Muster, die das Adhesiv (3) bildet, und das Volumen der Punkte des Adhesivs beibehalten werden.

2. Verfahren nach Anspruch 1, dadurch gekennzeichnet, daß der mittlere Durchmesser der im Adhesiv (3) enthaltenen Teilchen (1) zwischen 0,1 und 10 µ beträgt.

3. Verfahren nach Anspruch 1 oder 2, dadurch gekennzeichnet, daß die Verbindung des Adhesivs (3) und des Textilsubstrates (4) ohne Erhitzung des Substrates erfolgt.

4. Verfahren nach Anspruch 3, dadurch gekennzeichnet, daß der für die Verbindung des Adhesivs (3) und des Substrates (4) aufgewandte Druck zwischen 1 kg/m² und 10 kg/m² für einen Zeitraum von 0,01 sec. bis 0,10 sec. liegt.

5. Verfahren nach einem der Ansprüche 1 bis 4, dadurch gekennzeichnet, daß das Adhesiv (3) aus einer Vielzahl von auf dem Substrat (4) verteilten Punkten besteht.

6. Verfahren nach Anspruch 5, dadurch gekennzeichnet, daß der Durchmesser der Adhesivpunkte zwischen 350 und 750 µ liegt.

7. Verfahren nach einem der Ansprüche 1 bis 6, dadurch gekennzeichnet, daß das Textilsubstrat (4) ein Tuch ist.

8. Verfahren nach einem der Ansprüche 1 bis 6, dadurch gekennzeichnet, daß die Textiloberfläche (4) nicht regelmäßig ist.

9. Verfahren nach einem der Ansprüche 1 bis 6, dadurch gekennzeichnet, daß das Textilsubstrat (4) an seiner Oberfläche eine große Dichte von im wesentlichen senkrecht auf dieser stehenden Fasern aufweist.

10. Verfahren nach Anspruch 9, dadurch gekennzeichnet, daß bei der Verbindung des Adhesivs mit dem Textilsubstrat (4) die Fasern (5) bedeckt werden und das Adhesiv (3) über die Fasern (5) gelegt wird.
